# EUROPÄISCHE PATENTSCHRIFT

(11) **EP 3 374 799 B1**
(45) Veröffentlichungstag und Bekanntmachung des Hinweises auf die Patenterteilung: **18.10.2023**
(21) Anmeldenummer: 16816573.6
(22) Anmeldetag: 10.11.2016
(51) Int. Cl.: G01S 19/20, G01S 19/42, G01S 19/47, G01S 19/41, G01S 19/39

(54) **VERFAHREN UND VORRICHTUNG ZUM BEWERTEN EINER POSITION EINES FAHRZEUGS, INSBESONDERE NACH EINER ASIL SICHERHEITSSTUFE**
METHOD AND APPARATUS FOR ESTIMATING A POSITION OF A VEHICLE, PARTICULARLY ACCORDING TO AN ASIL SAFETY LEVEL
PROCÉDÉ ET DISPOSITIF PERMETTANT D'ÉVALUER UNE POSITION D'UN VÉHICULE, EN PARTICULIER SELON UNE ÉTAPE DE SÉCURITÉ ASIL

(30) Priorität: 12.11.2015 DE 102015222355; 01.02.2016 DE 102016201487
(43) Veröffentlichungstag der Anmeldung: 19.09.2018
(73) Patentinhaber: Continental Automotive Technologies GmbH, 30165 Hannover (DE)
(72) Erfinder: ANTONI, Henrik, 63579 Freigericht (DE); STÄHLIN, Ulrich, 65760 Eschborn (DE); ZALEWSKI, Michael, 60438 Frankfurt am Main (DE); SYGUDA, Sandro, 61381 Friedrichsdorf (DE); BLÜHER, Pierre, 65795 Hattersheim (DE); FAISST, Holger, 93161 Sinzing (DE)
(74) Vertreter: Continental Corporation
(86) Internationale Anmeldenummer: PCT/DE2016/200515
(87) Internationale Veröffentlichungsnummer: WO 2017/080556

(56) Entgegenhaltungen:
- FR-A1- 3 020 469
- US-A1- 2008 191 935
- US-A1- 2014 097 984
- LU DEBIAO ET AL: "Methods for certification of GNSS-based safe vehicle localisation in driving assistance systems", 2015 INTERNATIONAL CONFERENCE ON CONNECTED VEHICLES AND EXPO (ICCVE), IEEE, 19. Oktober 2015 (2015-10-19), Seiten 226-231, XP032889581, DOI: 10.1109/ICCVE.2015.19 [gefunden am 2016-04-04]
- MARCO WEGENER ET AL: "A Measurement Standard for Vehicle Localization and Its ISO-Compliant Measurement Uncertainty Evaluation", IEEE TRANSACTIONS ON INSTRUMENTATION AND MEASUREMENT, IEEE SERVICE CENTER, PISCATAWAY, NJ, US, Bd. 61, Nr. 11, 1. November 2012 (2012-11-01), Seiten 3003-3013, XP011470314, ISSN: 0018-9456, DOI: 10.1109/TIM.2012.2203872

## Beschreibung

Die Erfindung betrifft ein Verfahren zum Bewerten einer Position eines Fahrzeugs sowie eine Vorrichtung zum Ermitteln einer Position eines Fahrzeugs.

Globale Navigationssatellitensysteme wie GPS, Galileo, etc. sind Stand der Technik. Diese werden in heutigen Fahrzeugen dazu verwendet, um die Position des Fahrzeugs absolut in einem globalen Koordinatensystem zu ermitteln. Die Positionen werden heutzutage unter anderem dazu verwendet, um eine Navigation des Fahrzeugs durchzuführen.

Mit der Zunahme von automatisierten Fahrassistenzsystemen und den Plänen, dass das Fahrzeug autonom geführt werden soll, bekommt die Genauigkeit der Positionsdaten einen höheren Stellenwert. Um das Fahrzeug sicher autonom fahren zu können, bedarf es einer Positionsermittlung des Fahrzeugs, die über die Genauigkeit der heutigen Systeme hinausgeht. Neben der höheren Genauigkeit hinaus muss zu jedem Zeitpunkt sichergestellt sein, dass die Ermittlung der Position des Fahrzeugs einer funktionalen Sicherheit unterliegt, um nur vermeintlich korrekt ermittelte Positionen ermitteln und auszusortieren. Denn Eingriffe eines Fahrassistenzsystems aufgrund einer falschen Position können fatale Folgen haben. Aus der modernen Luftfahrt sind zwar Systeme bekannt, die sowohl eine hohe Genauigkeit als auch eine funktionale Sicherheit erreichen. Diese sind jedoch für den Einsatz in Fahrzeugen, wie zum Beispiel herkömmlichen Automobilien oder Motorrädern, viel zu groß und teuer.

Die FR 3 020 469 A1 betrifft eine Integritätskontrolle für ein Navigationssystem, bei der eine erste Einheit sowie eine zweite Einheit Satellitendaten empfangen und Ergebnisse an ein Ausgangsmodul ausgeben, wobei eine Integritätsprüfung von Messungen mehreren Satellitenkonstellationen implementiert ist, die es ermöglicht, mehrere gleichzeitige Ausfälle von Satelliten zu erfassen und einen Gesamtausfall einer der Konstellationen zu erfassen.

Die US 2008/191935 A1 betrifft eine Vorrichtung zur Auswahl eines Satellitennavigationsmoduls anhand eines Vergleichs einer kennzeichnenden Charakteristik, die beispielsweise einen örtlichen oder zeitlichen Fehler ausdrückt, womit das für eine aktuelle Positionsbestimmung geeignetste Satellitennavigationsmodul herausgesucht werden kann.

Davon ausgehend liegt der Erfindung daher die Aufgabe zugrunde ein Verfahren oder eine Vorrichtung aufzuzeigen, mit der eine Bewertung der ermittelten Position sicher durchgeführt werden kann. Die Erfindung soll es ermöglichen eine Grundlage für eine Entscheidung zur Nutzung einer ermittelten Position in Fahrassistenzsystemen bereitzustellen.

Die Aufgabe wird gelöst gemäß eines erstes Aspektes der Erfindung mittels eines Verfahrens zum Bewerten einer Position eines, insbesondere autonom geführten, Fahrzeugs mittels einer Vorrichtung zum Ermitteln einer Position eines Fahrzeugs, aufweisend eine Antenne zum Empfangen von Satellitennavigationsdaten eines globalen Satellitennavigationssystems (GNSS), mindestens eine Verarbeitungseinheit zum Verarbeiten der empfangenen Satellitennavigationsdaten und eine abgesicherte Sicherheitseinheit zum abgesicherten Verarbeiten von Daten, aufweisend die Schritte:
- Übertragen einer ersten von einer Verarbeitungseinheit ermittelten Absolutposition an die Sicherheitseinheit,
- Empfangen von Satellitennavigationsdaten mittels der Sicherheitseinheit,
- Ermitteln einer zweiten Absolutposition anhand der Satellitennavigationsdaten mittels der Sicherheitseinheit,
- Vergleichen der ersten Absolutposition mit der zweiten Absolutposition mittels der Sicherheitseinheit, und
- Bewerten der ersten Absolutposition in Abhängigkeit von der Abweichung zur zweiten Absolutposition oder umgekehrt mittels der Sicherheitseinheit.

Gemäß dem erfindungsgemäßen Verfahren wird zunächst eine erste Absolutposition mittels einer Verarbeitungseinheit oder eines GNSS-Empfängers in bekannter Weise ermittelt. Die erste Verarbeitungseinheit oder der GNSS-Empfänger muss nicht in spezieller Art und Weise ausgebildet sein, um hohen Sicherheitsanforderungen zu genügen. Es kann vielmehr auf Verarbeitungseinheiten oder GNSS-Empfänger zurückgegriffen werden, die aus dem Stand der Technik bekannt sind, insbesondere solchen, die sich für den Einsatz in Kraftfahrzeugen eignen. Es ist möglich, dass die von der ersten Verarbeitungseinheit ermittelte erste Absolutposition möglicherweise Fehlern unterliegen. Um diese Fehler erkennen und gegebenenfalls auch quantifizieren zu können wird erfindungsgemäß eine Sicherheitseinheit vorgesehen, die eine zweite Absolutposition ermittelt und eine Vergleichsbasis zum Bewerten der ersten Absolutposition schafft. Zu einer Position des Fahrzeugs werden somit auf zwei unterschiedlichen unabhängigen Wegen zwei Absolutpositionen ermittelt, wobei die zweite Absolutposition über eine abgesicherte Sicherheitseinheit ermittelt wird. Die Absicherung der Sicherheitseinheit stellt dabei sicher, dass die Sicherheitseinheit keinen funktionalen Fehlern unterliegt oder keine Fehlern bzw. Fehlermodi nichtdetektierten aufweist. Auf diese Weise kann auch angenommen werden, dass die zweite Absolutposition eine vertrauenswürdige Vergleichsbasis für die erste Absolutposition bildet.

Besonders vorteilhafter Weise werden die Schritte Ermitteln der zweiten Absolutposition, Vergleichen der ersten Absolutposition mit der zweiten Absolutposition und Bewerten der ersten Absolutposition ausschließlich in der Sicherheitseinheit durchgeführt. So kann der Hardwareaufwand klein gehalten Werden. Alternativ kann der Schritt des Vergleichens auch auf einer anderen Hardware oder einem anderen Chip durchgeführt werden.

Vorteilhaft ist auch, dass die Sicherheitseinheit auf den gleichen Satellitennavigationsdaten zurückgreift, der auch in der Verarbeitungseinheit zum Ermitteln der ersten Absolutposition verwendet wird. So kann die Sicherheitseinheit frühzeitig auch anhand der Satellitennavigationsdaten feststellen, ob ein Fehler in dem Datensatz selbst oder in der Verarbeitungseinheit vorliegt.

Es sei angemerkt, dass das erfindungsgemäße Verfahren auch zum Bestimmen einer Position eines Fahrzeugs verwendbar ist. Der erfindungsgemäße Gegengestand umfasst daher auch ein Verfahrens zum Ermitteln einer, insbesondere plausibilisierten Position für ein Fahrzeug oder Kraftfahrzeug, insbesondere eines autonom geführten Fahrzeugs.

Gemäß dem erfindungsgemäßen Verfahren wird mindestens der Teil der Sicherheitseinheit, welcher die zweite Absolutposition ermittelt, bevorzugterweise die gesamte Sicherheitseinheit, als software- und/oder hardwareseitig abgesicherte Sicherheitseinheit ausgebildet.

Dabei ist die Sicherheitseinheit als eigenständiger Mikrocontroller ausgebildet.

Darüber hinaus ist der Mikrocontroller derart ausgebildet, um die Anforderungen nach ASIL A, B, C oder D nach ISO 26262 zu erfüllen. Gemäß den vorgenannten Ausführungsformen wird die Sicherheitseinheit so ausgebildet, dass sie die erforderlichen Sicherheitsanforderungen für die jeweiligen Anwendungen stets erfüllt. Insbesondere die hardware- und softwareseitige Absicherung der Sicherheitseinheit gewährleistet, dass die zweite Absolutposition unter Berücksichtigung der heutzutage angewendeten Sicherheitsstandards ermittelt wird. Besonders bevorzugt ist es, dass die Hardware oder der Chip die Anforderungen eines gewünschten ASIL-Levels erreicht, d. h. einerseits eine ausreichend gute Ausfallwahrscheinlichkeit bzw. hohe Verfügbarkeit bietet, andererseits keine nichtdetektierten Fehlermodi aufweist. Durch diese Kombination wird im Sinne einer ASIL-Dekomposition neben der Absicherung der Hardware auch eine Redundanz bei der verwendeten Software oder Firmware erreicht.

Gemäß einer vorteilhaften Ausführungsform des erfindungsgemäßen Verfahrens erfolgt eine Ausgabe einer Position ausschließlich über die Sicherheitseinheit. Auf diese Weise wird sichergestellt, dass die Anwendungen, die die Positionen verwenden, diese über einen abgesicherten Kanal empfangen. Es sei angemerkt, dass die Sicherheitseinheit auch mehrere Positionsausgaben gleichzeitig ausgeben kann. Es ist anwendungsabhängig zu entscheiden, ob die erste Absolutposition direkt oder indirekt nach einer Verrechnung mit der zweiten Absolutposition ausgegeben wird. Darüber hinaus ist es denkbar neben der ersten Absolutposition auch die zweite Absolutposition auszugeben.

Gemäß einer vorteilhaften Ausführungsform des erfindungsgemäßen Verfahrens empfängt die Sicherheitseinheit fusionierte oder unmittelbare Sensordaten von Fahrdynamiksensoren, insbesondere Initialsensoren, für das Ermitteln der zweiten Absolutposition. Auf diese Weise kann die Sicherheitseinheit die zweite Absolutposition mit höherer Genauigkeit ermitteln.

Gemäß einer vorteilhaften Ausführungsform des erfindungsgemäßen Verfahrens sind die Fahrdynamiksensoren derart ausgebildet, um die Anforderungen nach ASIL A, B, C oder D nach ISO 26262 zu erfüllen. Auf diese Weise wird sichergestellt, dass keine funktionalen Fehler über die Fahrdynamiksensoren in die Sicherheitseinheit Eingang finden.

Gemäß einer vorteilhaften Ausführungsform des erfindungsgemäßen Verfahrens werden die Satellitennavigationsdaten an die Sicherheitseinheit übermittelt bevor Korrekturen, insbesondere von satellitenbedingten, signalbedingten, atmosphärischen, umgebungsbedingten Fehlern, an den Satellitennavigationsdaten angewendet werden. Dies hat zwar zur Folge, dass die Sicherheitseinheit eine zweite Absolutposition ermittelt, die möglicherweise ungenauer ist als die erste Absolutposition. Jedoch kann auf diese Weise eine fehlerhafte Einflussnahme der Korrekturdaten bei der Ermittlung der zweiten Absolutposition ausgeschlossen werden. Wenn also beabsichtigt wird, die zweite Absolutposition zwar ungenauer aber mit einer höheren Plausibilität zu ermitteln, so ist diese Ausführungsform besonders vorteilhaft. Liegen die Vergleichsergebnisse innerhalb definierter Toleranzen, so kann eine sichere Position ausgegeben werden. Die Toleranzen können dynamisch entsprechend der aktuellen GNSS Genauigkeit angepasst werden können. Unter den Korrekturdaten sind beispielsweise solche Daten zu verstehen, die die konstanten Fehler durch atmosphärische oder Multipass-Fehler korrigieren.

Gemäß einer vorteilhaften Ausführungsform des erfindungsgemäßen Verfahrens wird der auszugebenden Position ein Sicherheitsmaß, insbesondere in ASIL-Stufen, in Abhängigkeit der Abweichungen der mittels der ersten Verarbeitungseinheit ermittelten ersten Absolutposition zur zweiten Absolutposition zugeordnet. Das Sicherheitsmaß unterscheidet sich von einem Genauigkeitsmaß in der Art, dass es eine Aussage darüber trifft, mit welcher Wahrscheinlichkeit oder Sicherheit die ermittelte Absolutposition keinem Fehler, insbesondere funktionalen Fehler, unterliegt. Erfindungsgemäß wird daher vorgeschlagen, zwei unterschiedliche Gütemaße, nämlich einmal ein Genauigkeitsmaß und daneben auch ein Sicherheitsmaß, den jeweiligen auszugebenden Positionen zuzuordnen. Auf diese Weise können die folgenden Anwendungen die Verwendung der Positionen individuell vornehmen.

Gemäß einer vorteilhaften Ausführungsform des erfindungsgemäßen Verfahrens werden zum Ermitteln des Sicherheitsmaßes Sicherheitsstufen, insbesondere ASIL-Sicherheitsstufen, der eingesetzten Soft- und Hardwarekomponenten berücksichtigt.

Gemäß einer vorteilhaften Ausführungsform des erfindungsgemäßen Verfahrens umfasst das Verfahren den Schritt: Überprüfen der Satellitennavigationsdaten mittels der Sicherheitseinheit. Es wird hierbei vorgeschlagen, dass die Sicherheitseinheit die Rohdaten, welche zum Ermitteln der Absolutposition verwendet werden, auf ihre Plausibilität hin überprüft. Die Rohdaten werden hierzu in Relation zueinander gesetzt und daraufhin überprüft, ob eine nicht plausible Abweichung voneinander vorliegt.

Besonders bevorzugt ist dabei eine vorteilhafte Ausführungsform des erfindungsgemäßen Verfahrens, bei dem mehrere Satellitennavigationsdaten miteinander verglichen werden oder relativ zueinander betrachtet werden, insbesondere nach folgenden Kriterien:
- Distanzänderung zu einem Satelliten,
- Relativgeschwindigkeiten,
- Rangerates zu Satelliten,
- Abweichung in der Signalkorrelation unterschiedlicher Satellitensignale.

Gemäß einer vorteilhaften Ausführungsform des erfindungsgemäßen Verfahrens verarbeiten die erste Verarbeitungseinheit und die Sicherheitseinheit jeweils voneinander unabhängige Satellitensignale zum Ermitteln der ersten beziehungsweise der zweiten Absolutposition. Auf diese Weise können sogenannte Common-Cause-Fehler vermieden werden. Es wird insbesondere vorgeschlagen, dass die erste Verarbeitungseinheit beispielsweise Satellitensignale von GPS-Satelliten und die Sicherheitseinheit Satellitensignale von beispielsweise Galileo, Glonass oder Beidou verwendet beziehungsweise verarbeitet.

Gemäß einer vorteilhaften Ausführungsform des erfindungsgemäßen Verfahrens oder einem weiteren Aspekt der Erfindung wird vorgeschlagen, dass die Satellitennavigationsdaten mittels einer zweiten, insbesondere von der ersten Verarbeitungseinheit unabhängigen, Verarbeitungseinheit an die Sicherheitseinheit übermittelt werden. Dieser Ausführungsform beziehungsweise diesem Aspekt der Erfindung liegt der Grundgedanke zugrunde, dass zwei voneinander unabhängige Verarbeitungseinheiten oder GNSS-Empfänger verwendet werden. Eine davon beziehungsweise die erste Verarbeitungseinheit ist vollständig ausgebildet und eignet sich dazu, die eine oder erste Absolutposition zu ermitteln. Die zweite Verarbeitungseinheit unterscheidet sich von der ersten Verarbeitungseinheit, dass sie vorzugsweise nicht in gleicher Weise wie die erste Verarbeitungseinheit ausgebildet ist. Auf diese Weise können zum einen systemische Fehler in den Verarbeitungseinheiten nur auf die erste Verarbeitungseinheit beziehungsweise auf eine der Verarbeitungseinheiten beschränkt werden. Darüber hinaus weist die zweite Verarbeitungseinheit vorzugsweise eine verkürzte Datenverarbeitungskette zum Verarbeiten der Satellitennavigationsdaten auf, sodass mögliche Rückschlüsse auf Fehlertypen leichter erkennbar sind. Die verkürzte Datenverarbeitungskette in der zweiten Verarbeitungseinheit hat zudem den Vorteil, dass die Anzahl der Kettenglieder, die einen Fehler verursachen können, so klein wie möglich gehalten wird. Idealerweise umfasst die zweite Verarbeitungseinheit einen RF-Teil für GNSS incl. Filter und Mischer Und eine Korrelationseinheit oder einen Korrelator und Tracker zur Detektion der Satellitensignale.

Gemäß einer vorteilhaften Ausführungsform des erfindungsgemäßen Verfahrens werden die Satellitennavigationsdaten vor oder nach Anwendung von Korrekturen, insbesondere von satellitenbedingten, signalbedingten, atomsphärischen, umgebungsbedingten Fehlern, an die Sicherheitseinheit übermittelt. Auf diese Weise kann individuell festgelegt werden, welchen Einfluss die zweite Verarbeitungseinheit auf die zu übermittelnden Satellitennavigationsdaten hat.

Gemäß einer vorteilhaften Ausführungsform des erfindungsgemäßen Verfahrens überprüft die Sicherheitseinheit die erste Absolutposition daraufhin, ob sie innerhalb eines Toleranzbereiches zur zweiten Absolutposition liegt.

Gemäß einer vorteilhaften Ausführungsform des erfindungsgemäßen Verfahrens wird die auszugebende Position mit einem Flag oder einem Dateninhalt versehen, wenn die erste Absolutposition außerhalb des Toleranzbereiches liegt. Auf diese Weise wird eine Erkennbarkeit von unsicheren Positionen sichergestellt.

Die Aufgabe wird gelöst gemäß einem weiteren Aspekt der Erfindung mittels einer Vorrichtung zum Ermitteln einer Position eines Fahrzeugs, insbesondere zum Ausführen eines Verfahrens nach einem der vorstehenden Ausführungsformen, aufweisend:
- eine Antenne zum Empfangen von Satellitennavigationsdaten eines globalen Satellitennavigationssystems (GNSS), und
- mindestens einer Verarbeitungseinheit zum Verarbeiten der empfangenen Satellitennavigationsdaten,
- ferner aufweisend eine abgesicherte Sicherheitseinheit zum abgesicherten Verarbeiten von Satellitennavigationsdaten.

Gemäß einer vorteilhaften Ausführungsform der erfindungsgemäßen Vorrichtung weist die Sicherheitseinheit eine Einheit zum abgesicherten Ermitteln einer Absolutposition auf.

Gemäß einer vorteilhaften Ausführungsform der erfindungsgemäßen Vorrichtung weist die Sicherheitseinheit eine Vergleichseinheit zum abgesicherten Vergleichen zweier Absolutpositionen auf.

Gemäß einer vorteilhaften Ausführungsform der erfindungsgemäßen Vorrichtung weist die Sicherheitseinheit eine Ausgabeeinheit zum abgesicherten Ausgeben einer Position auf.

Gemäß einer vorteilhaften Ausführungsform der erfindungsgemäßen Vorrichtung weist die Vorrichtung ferner eine zweite Verarbeitungseinheit zum Verarbeiten der empfangenen Satellitennavigationsdaten auf, wobei die zweite Verarbeitungseinheit unabhängig von der ersten Verarbeitungseinheit ausgebildet ist und mit der Sicherheitseinheit gekoppelt ist.

Vorzugsweise sind die erste und zweite Verarbeitungseinheit in Bezug auf ihre Soft- und/oder Hardware unterschiedlich ausgebildet. Besonders bevorzugt ist eine Verwendung von Verarbeitungseinheiten, die von unterschiedlichen Herstellern stammen.

Besonders bevorzugt ist darüber hinaus auch eine minimale Ausstattung der zweiten Verarbeitungseinheit mit einem Hochfrequenzwandler, Analog-Digital-Wandler und einer Korrelationseinheit zum Zuordnen der Satellitennavigationsdaten zu den jeweiligen Satelliten. Auf diese Weise können zum einen Kosten für die zweite Verarbeitungseinheit gespart werden. Darüber hinaus wird die Kette möglicher Fehlerursachen so klein wie möglich gehalten.

Gemäß einer vorteilhaften Ausführungsform der erfindungsgemäßen Vorrichtung weist die Vorrichtung ferner jeweils eine Korrektureinheit zur Korrektur von Fehlern in den Satellitennavigationsdaten, insbesondere von satellitenbedingten, signalbedingten, atmosphärischen, umgebungsbedingten Fehlern, für die erste und zweite Verarbeitungseinheit auf.

Gemäß einer vorteilhaften Ausführungsform der erfindungsgemäßen Vorrichtung ist mindestens der Teil der Sicherheitseinheit, welcher die zweite Absolutposition ermöglicht, bevorzugterweise die gesamte Sicherheitseinheit als software- und/oder hardwareseitig abgesicherte Sicherheitseinheit ausgebildet.

Gemäß einer vorteilhaften Ausführungsform der erfindungsgemäßen Vorrichtung ist die Sicherheitseinheit als eigenständiger Mikrocontroller ausgebildet.

Gemäß einer besonders bevorzugten Ausführungsform der erfindungsgemäßen Vorrichtung ist der Mikrocontroller derart ausgebildet, um die Anforderungen nach ASIL A, B, C oder D nach ISO 26262 zu erfüllen.

Die Erfindung umfasst ferner ein Computerprogramm zum Ausführen eines Verfahrens nach einem der vorgenannten Ausführungsformen auf einer erfindungsgemäßen Vorrichtung.

Die Erfindung wird nachfolgend anhand von zwei Ausführungsbeispielen und Figuren näher beschrieben. Es zeigen:
- Figur 1: ein Blockschaltdiagramm eines erstes Ausführungsbeispiels der erfindungsgemäßen Vorrichtung zum Ausführen des erfindungsgemäßen Verfahrens, und
- Figur 2: ein Blockschaltdiagramm eines zweites Ausführungsbeispiels der erfindungsgemäßen Vorrichtung zum Ausführen des erfindungsgemäßen Verfahrens.

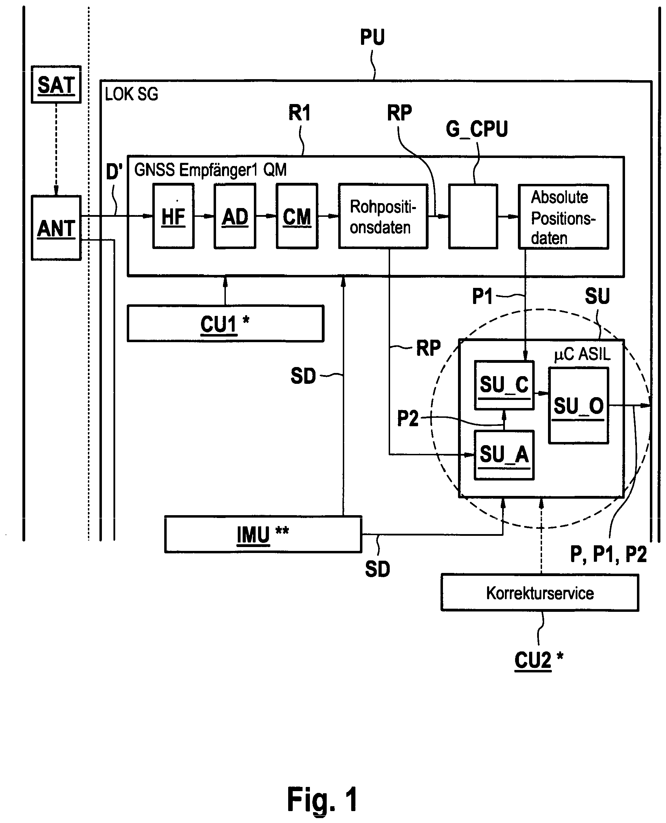

Figur 1 zeigt ein Blockschaltdiagramm des ersten Ausführungsbeispiels der erfindungsgemäßen Vorrichtung PU zum Ermitteln einer Position eines Fahrzeugs. Die Vorrichtung PU ist vorzugsweise in einem Kraftfahrzeug, insbesondere einem autonom geführten Fahrzeug, eingebaut. Das Fahrzeug ist in den Figuren nicht abgebildet. Ferner umfasst das Fahrzeug eine Antenne ANT zum Empfangen von Satellitendaten von GNSS-Satelliten SAT.

Die Vorrichtung weist eine erste Verarbeitungseinheit R1 auf, welche die Satellitendaten D' über die Antenne ANT empfängt. Darüber hinaus weist die Vorrichtung PU eine Sicherheitseinheit SU auf, welche mit der Verarbeitungseinheit R1 gekoppelt ist, um von der ersten Verarbeitungseinheit R1 eine Absolutposition P1 zu empfangen. Darüber hinaus weist die Vorrichtung eine Korrektureinheit CU1 auf, welche mit der ersten Verarbeitungseinheit R1 gekoppelt ist. Ferner weist die Vorrichtung PU eine Sensoreinheit IMU auf, welche Sensordaten SD zur Fahrzeugdynamik erfasst. Die Korrektureinheit CU1 ist optional und dann vorteilhaft, wenn die Genauigkeit oder Verlässlichkeit der zu ermittelnden ersten Absolutposition erhöht werden soll. Die Sensoreinheit IMU ist auch optional und dann vorteilhaft, wenn eine höhere Verfügbarkeit und Genauigkeit der Absolutpositionen beziehungsweise Absolutposition notwendig ist.

Die erste Verarbeitungseinheit R1 weist mehrere Funktionsblöcke auf. Die von der Antenne ANT empfangenen Satellitendaten D' werden mittels eines Hochfrequenzfilters HF und eines Analog-Digital-Wandlers AD vorverarbeitet. Die vorverarbeiteten Daten werden dann an eine Korrelationseinheit oder einen Korrelator und Tracker CM übermittelt. Die Korrelationseinheit sorgt dafür, dass die Satellitendaten D' den jeweiligen Satelliten zugeordnet werden, von denen sie empfangen wurden. Die so verarbeiteten Satellitendaten D' können dann als Rohdaten der Satellitennavigationsdaten bzw. den Satellitennavigationsdaten RP dazu verwendet werden, um eine Absolutposition zu ermitteln. In der ersten Verarbeitungseinheit R1 ist dafür ein softwareseitiger oder hardwareseitiger Prozessor G_CPU vorhanden, welcher aus den Rohdaten bzw. den Satellitennavigationsdaten RP eine erste Absolutposition P1 ermittelt. Diese wird dann an einen Komparator SU_C der Sicherheitseinheit SU übermittelt.

Die Sicherheitseinheit SU weist insgesamt drei Funktionsblöcke auf. Zum einen weist sie einen Softwarealgorithmusblock SU_A auf, der aus den Rohdaten der Satellitennavigationsdaten RP eine zweite Absolutposition P2 ermittelt. Ferner weist die Sicherheitseinheit SU einen Komparator SU_C auf, dem die zweite Absolutposition P2 zur Verfügung gestellt wird.

Innerhalb des Komparators SU_C wird die erste und zweite Absolutposition miteinander verglichen und in unterschiedlicher Weise plausibilisiert. Die Bewertung der ersten Absolutposition P1 auf Basis der zweiten Absolutposition P2 kann dabei in unterschiedlicher Weise erfolgen, wie hiernach weiter beschrieben.

Eine Ausgabe- und Bewertungseinheit SU_O der Sicherheitseinheit SU ist dazu ausgebildet, die auszugebende Position P mit einem Genauigkeits- und/oder Sicherheitsmaß zu kennzeichnen.

Zum Ermitteln des Sicherheitsmaßes ist erfindungsgemäß vorgesehen, dass die an die Sicherheitseinheit SU übermittelten Rohdaten der Satellitennavigationsdaten RP nicht mittels der Korrektureinheit CU1 bearbeitet werden. Dies hat jedoch keinen Einfluss auf die Verarbeitung der Satellitennavigationsdaten in der ersten Verarbeitungseinheit R1. Diese werden weiterhin mittels der Korrektureinheit CU1 korrigiert, um eine möglichst genaue Absolutposition zu ermitteln. In diesem Fall kann es zwar sein, dass die zweite Absolutposition nicht die gleiche Genauigkeit wie die erste Absolutposition P1 aufweist. Jedoch ist sichergestellt, dass die zweite Absolutposition plausibel ist. Somit kann auch eine Plausibilität der ersten Absolutposition P1 ermittelt werden, wenn sie innerhalb eines größeren Toleranzbereiches zur zweiten Absolutposition liegt. Auf diese Weise kann die erste Absolutposition P1 mit zwei unterschiedlichen Gütemaßen, nämlich dem Genauigkeitsmaß und dem Sicherheitsmaß, gekennzeichnet werden.

Idealerweise differenziert man dabei die Positionsausgabe zwischen hochgenau und sicherheitsrelevant. So kann die hochgenaue Position ausgegeben werden, inkl. der hohen Genauigkeit während man für Sicherheitsanwendungen der "Hochgenauen" Position einen ASIL mit zugehörigem dynamischen Safety Limit.das sich unter anderem dem aus der entsprechender GNSS Genauigkeit und dem ASIL Vergleich ergibt. Somit kann bspw. eine auf Genauigkeit optimierte Positionsinformation mit einer Genauigkeit von z.B. 10 cm ausgeben werden, und einen abgesicherte Information mit einem ASIL (Automotive Safety Integrity Level) auf das dynamische Safety Limit, von z.B. 7 m, ausgegeben werden. Folgeanwendungen können dann basierend auf beiden Werten optimal arbeiten und eine präzise Regelung verbunden mit abgesicherten Funktionen darstellen. Es kann dabei offenbleiben, in welchem Datenformat diese Gütemaße, d. h. Genauigkeitsmaß und Sicherheitsmaß, ausgegeben werden.

Die Positionsermittlungseinheit SO_A der Sicherheitseinheit SU ist darüber hinaus ausgebildet, dass sie die Satellitennavigationsdaten RP direkt plausibilisieren kann. Die Rohdaten der Satellitennavigationsdaten RP werden hierzu relativ zueinander abgeglichen. Ist sichergestellt, dass die Rohdaten der Satellitennavigationsdaten RP plausibel sind, kann im Anschluss eine abgesicherte zweite Absolutposition P2 ermittelt werden. Bei der Überprüfung der Rohdaten der Satellitennavigationsdaten RP kann bewusst auf die Berücksichtigung von Fahrdynamiksensordaten der Sensoreinheit IMU verzichtet werden. Die Überprüfung der Rohdaten der Satellitennavigationsdaten RP kann beispielsweise umfassen die Überprüfung von Positionsänderungen und davon abgeleiteten Größen, Distanzänderungen zum Satelliten, Relativgeschwindigkeiten und resultierende Rangerates zum Satelliten, Vergleich der Rohsignale untereinander und Ausnutzung von Signalkorrelationen. Auf diese Weise kann die Sicherheitseinheit SU dafür verwendet werden, um die Verarbeitungseinheit beziehungsweise den GNSS-Empfängern R1 zu überwachen und dennoch eine abgesicherte Absolutposition zu generieren.

Vorzugsweise kann die erfindungsgemäße Vorrichtung PU derart ausgebildet sein, dass die Verarbeitungseinheit R1 der Sicherheitseinheit SU Satellitennavigationsdaten RP zur Verfügung stellt, die von anderen Satellitennavigationstypen stammen als diejenigen, die von der ersten Verarbeitungseinheit R1 verwendet werden. Die Unabhängigkeit der Positionsbestimmung im GNSS-Empfänger R1 und der Sicherheitseinheit SU wird auf diese Weise weiter erhöht und die Wahrscheinlichkeit von Common-Cause-Fehlern weiter reduziert.

Durch das beschriebene Verfahren kann mit relativ geringem Aufwand eine Redundanz in der Berechnung der Absolutposition erreicht werden, die die verfügbaren Verarbeitungseinheiten, GNSS-Empfänger oder einem GNSS-Chip mit ihren Eigenschaften ideal ausnutzt. Mit einem GNSS Chip, insbesondere einenm Chip der neben den Branchenüblichen Qualitätsmaßnahmen keine weitere Absicherung bereitstellt, und einem ASIL Chip für die Sicherheitseinheit SU, insbesondere einem nach ISO 26262 entwickeltem Chip, kann durch entsprechende Überwachung eine ASIL Position P bereitgestellt werden. Damit kann auf seltenen und teure ASIL GNSS Chips, die jeweils Einzelsysteme und Entwicklungen in kleinen Stückzahlen (< 1000 p.a.) und damit nicht für den Massenmarkt (> 1000000 p.a) tauglich sind, verzichtet werden. Auch für die Massenmarkt GNSS Lieferanten entfällt und damit die teure und aufwendige Entwicklung einer Sonderhardware mit ASIL Funktionalität für den Automobilmarkt, da deren Fokus häufig auf Qualitätsanforderungen für Smartphones und andere Massenware ohne Sicherheitsfunktion liegt.

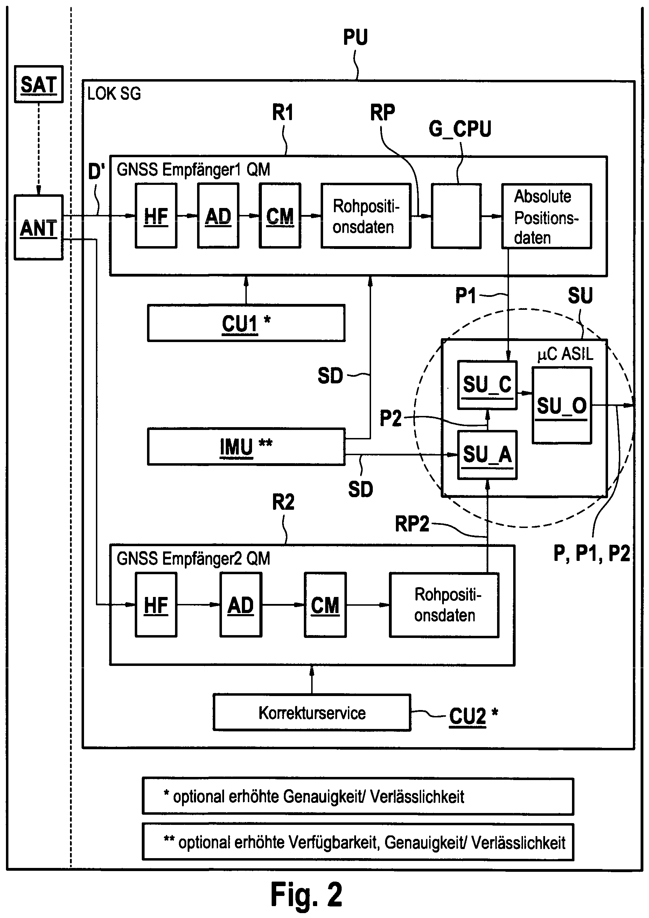

In Figur 2 ist ein zweites Ausführungsbeispiel der erfindungsgemäßen Vorrichtung abgebildet. Das zweite Ausführungsbeispiel unterscheidet sich vom ersten Ausführungsbeispiel dadurch, dass es eine zweite Verarbeitungseinheit R2 aufweist, welche jedoch unterschiedlich zur ersten Verarbeitungseinheit R1 ausgebildet ist. Die zweite Verarbeitungseinheit R2 weist lediglich in diesem Ausführungsbeispiel einen Hochfrequenzfilter HF, einen Analog-Digital-Wandler AD und eine Korrelationseinheit CM auf. In der zweiten Verarbeitungseinheit werden daraufhin nur Rohdaten der Satellitennavigationsdaten RP2 unabhängig von der ersten Verarbeitungseinheit R1 generiert. Diese werden dann der Sicherheitseinheit SU zur Verfügung gestellt, sodass in der Positionsermittlungseinheit SU_A der Sicherheitseinheit SU die zweite Absolutposition P2 ermittelt werden kann.

Die Position P kann nun im Fahrzeug weiter verwendet werden. Je nach Anwendungsfall sind mehrere Ausgaben durch die Ausgabe- und Bewertungseinheit SU_O denkbar. Die auszugebende Position P kann der ersten Absolutposition entsprechen. Alternativ kann die auszugebenden Position P auch der zweiten Absolutposition entsprechen. Weiterhin alternativ kann die auszugebende Position P kann aus der ersten und zweiten Absolutposition ermittelt werden. Darüber hinaus alternativ können auch die erste und zweite Absolutposition ausgegebenen werden. Sollte eine Plausibilisierung der Absolutposition über den Vergleich nicht möglich sein, wird dies im Fahrzeug über ein Flag mitgeteilt.

Der Vorteil des zweiten Ausführungsbeispiels liegt unter anderem darin, dass durch die unterschiedliche Ausgestaltung der Verarbeitungseinheiten unterschiedliche Fehlerquellen sicher erkannt werden können. Da die empfangenen Satellitennavigationsdaten D' auf zwei unterschiedlichen Kanälen verarbeitet und anschließend zum einen in der ersten Verarbeitungseinheit R1 und in der Sicherheitseinheit zu Absolutpositionen P1, P2 verarbeitet werden, ist es möglich einzelne Fehlerarten, die in den Verarbeitungseinheiten R1, R2 auftreten können, miteinander zu vergleichen und zu erkennen. Auf diese Weise wird sichergestellt, dass die Fehler in der erfindungsgemäßen Vorrichtung erkannt und entsprechend markiert werden können.

Beiden Ausführungsbeispielen liegt der Grundgedanke zu Grunde, dass die Sicherheitseinheit eine abgesicherte Einheit bildet, die zu jedem Zeitpunkt fehlerfrei funktioniert. Dabei müssen Berechnungen, Vergleich und Auslegung von Hardware und Software gemäß der erforderlichen Sicherheitsintegrität, z. B. gemäß einer ASIL Stufe , erfolgen. Dafür wird vorzugsweise ein Mikrocontroller verwendet, der gemäß einer der Sicherheitsstufen ASIL A-D nach ISO 26262 ausgebildet ist. Die erste und zweite Verarbeitungseinheit R1 und R2 müssen dann nicht mehr als teure Komponenten ausgebildet werden, welche ebenfalls die hohen Sicherheitsstufen erfüllen. Die Kosten zur Herstellung einer erfindungsgemäßen Vorrichtung können auf diese Weise effektiv verringert werden, ohne gleichzeitig die Sicherheit bei der Ermittlung der Absolutpositionen zu reduzieren.

Je nach Anforderung an die Güte und Verfügbarkeit des Signals kann auf die Korrekturservices und/oder Inertialsensorik auch verzichtet werden. Diesbezüglich können die GNSS Receiver auch mit einer oder mehreren Konstellation arbeiten (GPS, Galileo, Glonass, ...) Diese müssen für die Positionsberechnung nicht gleich sein. Verschiedene Konstellationen wären bezüglich der Sicherheitsintegrität ein vorteilhaftes Argument. Auch die Arbeit mit verschiedenen GNSS Frequenzen ist möglich und kann zusätzlich eine Sicherheitsargumentation unterstützen.

Zusätzlich können aus den absoluten Positionsdaten auch die absoluten Geschwindigkeiten und Beschleunigungen mit Sicherheitsintegrität berechnet werden.

## Patentansprüche

1. Verfahren zum Bewerten einer Position eines, insbesondere autonom geführten, Fahrzeugs mittels einer Vorrichtung zum Ermitteln einer Position eines Fahrzeugs, aufweisend eine Antenne zum Empfangen von Satellitennavigationsdaten eines globalen Satellitennavigationssystems (GNSS), mindestens eine Verarbeitungseinheit zum Verarbeiten der empfangenen Satellitennavigationsdaten, und eine abgesicherten Sicherheitseinheit zum abgesicherten Verarbeiten von Daten, aufweisend die Schritte:
- Übertragen einer ersten von einer ersten Verarbeitungseinheit ermittelten Absolutposition an die Sicherheitseinheit,
- Empfangen der Satellitennavigationsdaten mittels der Sicherheitseinheit,
- Ermitteln einer zweiten Absolutposition anhand der Satellitennavigationsdaten mittels der Sicherheitseinheit,
- Vergleichen der ersten Absolutposition mit der zweiten Absolutposition mittels der Sicherheitseinheit, und
- Bewerten der ersten Absolutpositionen in Abhängigkeit von der Abweichung zur zweiten Absolutposition oder umgekehrt mittels der Sicherheitseinheit,
wobei mindestens der Teil der Sicherheitseinheit, welcher die zweite Absolutposition ermittelt, als software- und / oder hardwareseitig abgesicherte Sicherheitseinheit ausgebildet ist, wobei die Sicherheitseinheit als eigenständiger Microcontroller ausbildet ist, und wobei der Microcontroller derart ausgebildet ist, um die Anforderungen nach ASIL A, B, C oder D nach ISO 26262 zu erfüllen.

2. Verfahren nach einem der vorstehenden Ansprüche, wobei eine Ausgabe einer Position an andere Anwendungen ausschließlich über die Sicherheitseinheit erfolgt.

3. Verfahren nach einem der vorstehenden Ansprüche, wobei die Sicherheitseinheit fusionierte oder unmittelbare Sensordaten von Fahrdynamiksensoren, insbesondere Inertialsensoren, für das Ermitteln der zweiten Absolutposition empfängt.

4. Verfahren nach dem vorstehenden Anspruch, wobei die Fahrdynamiksensoren derart ausgebildet sind, um die Anforderungen nach ASIL A, B, C oder D nach ISO 26262 zu erfüllen.

5. Verfahren nach dem vorstehenden Anspruch, wobei die Satellitennavigationsdaten an die Sicherheitseinheit übermittelt werden bevor Korrekturen, insbesondere von satellitenbedingten, signalbedingten, atmosphärischen, umgebungsbedingten Fehlern, an den Satellitennavigationsdaten angewendet werden.

6. Verfahren nach dem vorstehenden Anspruch, wobei der auszugebenden Position ein Sicherheitsmaß, insbesondere in ASIL Stufen, in Abhängigkeit der Abweichung der mittels der ersten Verarbeitungseinheit ermittelten ersten Absolutposition zur zweiten Absolutposition zugeordnet wird.

7. Verfahren nach einem der vorstehenden Ansprüche, wobei zum Ermitteln des Sicherheitsmaßes Sicherheitsstufen, insbesondere ASIL Sicherheitsstufen, der eingesetzten Soft- und Hardwarekomponenten berücksichtigt werden.

8. Verfahren nach einem der vorstehenden Ansprüche, ferner umfassend den Schritt: Überprüfen der Satellitennavigationsdaten mittels der Sicherheitseinrichtung.

9. Verfahren nach dem vorstehenden Anspruch, wobei mehrere Satellitennavigationsdaten miteinander verglichen werden, insbesondere nach folgenden Kriterien:
- Distanzänderung zu einem Satelliten,
- Relativgeschwindigkeiten,
- Rangerates zu Satelliten,
- Abweichungen in der Signalkorrelation unterschiedlicher Satellitensignale.

10. Verfahren nach einem der Ansprüche 1 bis 4, wobei die Satellitennavigationsdaten mittels einer zweiten, insbesondere von der ersten Verarbeitungseinheit unabhängigen, Verarbeitungseinheit an die Sicherheitseinheit übermittelt werden.

11. Verfahren nach dem vorstehenden Anspruch, wobei die Satellitennavigationsdaten vor oder nach Anwendung von Korrekturen, insbesondere von satellitenbedingten, signalbedingten, atmosphärischen, umgebungsbedingten Fehlern, an die Sicherheitseinheit übermittelt werden.

12. Verfahren nach einem der Ansprüche 10 oder 11, wobei die Sicherheitseinheit die erste Absolutposition daraufhin überprüft, ob sie innerhalb eines Toleranzbereiches zur zweiten Absolutposition liegt.

13. Verfahren nach einem der Ansprüche 10 bis 12, wobei die auszugebende Position mit einem Flag oder einem Dateninhalt versehen wird, wenn die erste Absolutposition außerhalb des Toleranzbereiches liegt.

14. Vorrichtung zum Ermitteln einer Position eines Fahrzeugs, welche zur Ausführung der Schritte des Verfahrens nach einem der vorstehenden Ansprüche ausgebildet ist, aufweisend:
- eine Antenne zum Empfangen von Satellitennavigationsdaten eines globalen Satellitennavigationssystems (GNSS),und
- mindestens eine Verarbeitungseinheit zum Verarbeiten der empfangenen Satellitennavigationsdaten,
**gekennzeichnet durch** eine abgesicherte Sicherheitseinheit zum abgesicherten Verarbeiten der Satellitennavigationsdaten, wobei die Sicherheitseinheit als eigenständiger Microcontroller ausbildet ist, und wobei der Microcontroller derart ausgebildet ist, um die Anforderungen nach ASIL A, B, C oder D nach ISO 26262 zu erfüllen.

15. Vorrichtung nach Anspruch 14, wobei die Sicherheitseinheit eine Ausgabeeinheit zum abgesicherten Ausgeben der Position aufweist.

16. Vorrichtung nach einem der Ansprüche 14 bis 15, wobei die Vorrichtung ferner eine zweite Verarbeitungseinheit zum Verarbeiten der empfangenen Satellitennavigationsdaten aufweist, wobei die zweite Verarbeitungseinheit unabhängig von der ersten Verarbeitungseinheit ausgebildet ist und mit der Sicherheitseinheit gekoppelt ist.

17. Vorrichtung nach dem vorstehenden Anspruch, wobei die Vorrichtung ferner zwei Korrektureinheiten zur Korrektur von Fehlern in den Satellitennavigationsdaten, insbesondere von satellitenbedingten, signalbedingten, atmosphärischen, umgebungsbedingten Fehlern, für jeweils die erste und zweite Verarbeitungseinheit aufweist.

18. Vorrichtung nach einem der Ansprüche 14 bis 17, wobei mindestens der Teil der Sicherheitseinheit, welcher eine zweite Absolutposition ermittelt, bevorzugter Weise die gesamte Sicherheitseinheit, als software- und / oder hardwareseitig abgesicherte Sicherheitseinheit ausgebildet ist.

## Claims

1. Method for assessing a position of a vehicle, in particular an autonomously guided vehicle, by means of an apparatus for determining a position of a vehicle, having an antenna for receiving satellite navigation data from a global satellite navigation system (GNSS), at least one processing unit for processing the received satellite navigation data, and a secure safety unit for the secure processing of data, having the steps of:
- transmitting a first absolute position determined by a first processing unit to the safety unit,
- receiving the satellite navigation data by means of the safety unit,
- determining a second absolute position on the basis of the satellite navigation data by means of the safety unit,
- comparing the first absolute position with the second absolute position by means of the safety unit, and
- assessing the first absolute positions on the basis of the deviation from the second absolute position or vice versa by means of the safety unit,
wherein at least that part of the safety unit which determines the second absolute position is in the form of a safety unit which is secure in terms of software and/or hardware, wherein the safety unit is in the form of an independent microcontroller, and wherein the microcontroller is designed to meet the requirements of ASIL A, B, C or D according to ISO 26262.

2. Method according to one of the preceding claims, wherein a position is output to other applications solely via the safety unit.

3. Method according to one of the preceding claims, wherein the safety unit receives fused or direct sensor data from driving dynamics sensors, in particular inertial sensors, for the purpose of determining the second absolute position.

4. Method according to the preceding claim, wherein the driving dynamics sensors are designed to meet the requirements of ASIL A, B, C or D according to ISO 26262.

5. Method according to the preceding claim, wherein the satellite navigation data are transmitted to the safety unit before corrections, in particular of satellite-related, signal-related, atmospheric or environment-related errors, are applied to the satellite navigation data.

6. Method according to the preceding claim, wherein a degree of safety, in particular in ASIL levels, is assigned to the position to be output on the basis of the deviation of the first absolute position determined by means of the first processing unit from the second absolute position.

7. Method according to one of the preceding claims, wherein safety levels, in particular ASIL safety levels, of the software and hardware components used are taken into account in order to determine the degree of safety.

8. Method according to one of the preceding claims, also comprising the step of: checking the satellite navigation data by means of the safety device.

9. Method according to the preceding claims, wherein a plurality of items of satellite navigation data are compared with one another, in particular according to the following criteria:
- change in the distance from a satellite,
- relative speeds,
- range rates from satellites,
- deviations in the signal correlation of different satellite signals.

10. Method according to one of Claims 1 to 4, wherein the satellite navigation data are transmitted to the safety unit by means of a second processing unit which is in particular independent of the first processing unit.

11. Method according to the preceding claim, wherein the satellite navigation data are transmitted to the safety unit before or after applying corrections, in particular of satellite-related, signal-related, atmospheric or environment-related errors.

12. Method according to either of Claims 10 and 11, wherein the safety unit checks the first absolute position in order to determine whether it is within a tolerance range with respect to the second absolute position.

13. Method according to one of Claims 10 to 12, wherein the position to be output is provided with a flag or data content if the first absolute position is outside the tolerance range.

14. Apparatus for determining a position of a vehicle, which is designed to carry out the steps of the method according to one of the preceding claims, having:
- an antenna for receiving satellite navigation data from a global satellite navigation system (GNSS), and
- at least one processing unit for processing the received satellite navigation data,
**characterized by** a secure safety unit for the secure processing of the satellite navigation data, wherein the safety unit is in the form of an independent microcontroller, and wherein the microcontroller is designed to meet the requirements of ASIL A, B, C or D according to ISO 26262.

15. Apparatus according to Claim 14, wherein the safety unit has an output unit for the secure output of the position.

16. Apparatus according to one of Claims 14 to 15, wherein the apparatus also has a second processing unit for processing the received satellite navigation data, wherein the second processing unit is independent of the first processing unit and is coupled to the safety unit.

17. Apparatus according to the preceding claim, wherein the apparatus also has two correction units for correcting errors in the satellite navigation data, in particular satellite-related, signal-related, atmospheric or environment-related errors, for the first and second processing unit in each case.

18. Apparatus according to one of Claims 14 to 17, wherein at least that part of the safety unit which determines a second absolute position, preferably the entire safety unit, is in the form of a safety unit that is secure in terms of software and/or hardware.

## Revendications

1. Procédé pour évaluer une position d'un véhicule, notamment à conduite autonome, au moyen d'un arrangement destiné à déterminer une position d'un véhicule, comprenant une antenne destinée à recevoir des données de navigation par satellite d'un système mondial de navigation par satellite (GNSS), au moins une unité de traitement destinée à traiter les données de navigation par satellite reçues, et une unité de sécurité sécurisée destinée au traitement sécurisé de données, comprenant les étapes suivantes :
- transmission à l'unité de sécurité d'une première position absolue déterminée par une première unité de traitement,
- réception des données de navigation par satellite au moyen de l'unité de sécurité,
- détermination d'une deuxième position absolue à l'aide des données de navigation par satellite au moyen de l'unité de sécurité,
- comparaison de la première position absolue avec la deuxième position absolue au moyen de l'unité de sécurité, et
- évaluation des premières positions absolues en fonction de l'écart par rapport à la deuxième position absolue ou inversement au moyen de l'unité de sécurité,
au moins la partie de l'unité de sécurité qui détermine la deuxième position absolue étant réalisée sous la forme d'une unité de sécurité sécurisée du côté du logiciel et/ou du matériel, l'unité de sécurité étant réalisée sous la forme d'un microcontrôleur autonome et le microcontrôleur étant configuré pour satisfaire les exigences selon ASIL A, B, C ou D selon l'ISO 26262.

2. Procédé selon l'une des revendications précédentes, une délivrance en sortie d'une position à d'autres applications s'effectuant exclusivement par le biais de l'unité de sécurité.

3. Procédé selon l'une des revendications précédentes, l'unité de sécurité recevant des données de capteur fusionnées ou directes de la part de capteurs de dynamique de conduite, notamment de capteurs inertiels, pour la détermination de la deuxième position absolue.

4. Procédé selon la revendication précédente, les capteurs de dynamique de conduite étant configurés de manière à satisfaire les exigences selon ASIL A, B, C ou D selon l'ISO 26262.

5. Procédé selon la revendication précédente, les données de navigation par satellite étant communiquées à l'unité de sécurité avant que des corrections, notamment d'erreurs liées au satellite, liées aux signaux, atmosphériques, liées à l'environnement, soient appliquées aux données de navigation par satellite.

6. Procédé selon la revendication précédente, une marge de sécurité, notamment un niveau ASIL, étant attribuée à la position à délivrer en sortie en fonction de l'écart entre la première position absolue, déterminée au moyen de la première unité de traitement, et la deuxième position absolue.

7. Procédé selon l'une des revendications précédentes, les composants logiciels et matériels étant pris en compte pour la détermination de la marge de sécurité des niveaux de sécurité, notamment des niveaux de sécurité ASIL.

8. Procédé selon l'une des revendications précédentes, comprenant en outre l'étape : vérification des données de navigation par satellite au moyen du dispositif de sécurité.

9. Procédé selon la revendication précédente, plusieurs données de navigation par satellite étant comparées entre elles, notamment d'après les critères suivants :
- modification de la distance par rapport à un satellite,
- vitesses relatives,
- vitesses radiales par rapport au satellite,
- écarts dans la corrélation de signaux de différents signaux de satellite.

10. Procédé selon l'une des revendications 1 à 4, les données de navigation par satellite étant communiquées à l'unité de sécurité au moyen d'une deuxième unité de traitement, notamment indépendante de la première unité de traitement.

11. Procédé selon l'une des revendications précédentes, les données de navigation par satellite étant communiquées à l'unité de sécurité avant ou après l'application de corrections, notamment d'erreurs liées au satellite, liées aux signaux, atmosphériques, liées à l'environnement.

12. Procédé selon l'une des revendications 10 ou 11, l'unité de sécurité vérifiant la première position absolue afin de s'assurer qu'elle se trouve à l'intérieur d'une plage de tolérance par rapport à la deuxième position absolue.

13. Procédé selon l'une des revendications 10 à 12, la position à indiquer étant pourvue d'un fanion ou d'un contenu de données lorsque la première position absolue se trouve en dehors de la plage de tolérance.

14. Arrangement destiné à déterminer une position d'un véhicule, lequel est configuré pour exécuter les étapes du procédé selon l'une des revendications précédentes, comprenant :
- une antenne destinée à recevoir des données de navigation par satellite d'un système mondial de navigation par satellite (GNSS),
- au moins une unité de traitement destinée à traiter les données de navigation par satellite reçues,
**caractérisé par** une unité de sécurité sécurisée destinée au traitement sécurisé des données de navigation par satellite, l'unité de sécurité étant réalisée sous la forme d'un microcontrôleur autonome et le microcontrôleur étant configuré pour satisfaire les exigences selon ASIL A, B, C ou D selon l'ISO 26262.

15. Arrangement selon la revendication 14, l'unité de sécurité possédant une unité de sortie destinée à la délivrance en sortie sécurisée de la position.

16. Arrangement selon l'une des revendications 14 à 15, l'arrangement possédant en outre une deuxième unité de traitement destinée au traitement des données de navigation par satellite reçues, la deuxième unité de traitement étant configurée indépendamment de la première unité de traitement et étant couplée à l'unité de sécurité.

17. Arrangement selon la revendication précédente, l'arrangement possédant en outre deux unités de correction destinées à corriger des erreurs dans les données de navigation par satellite, notamment d'erreurs liées au satellite, liées aux signaux, atmosphériques, liées à l'environnement, respectivement pour la première et la deuxième unité de traitement.

18. Arrangement selon l'une des revendications 14 à 17, au moins une partie de l'unité de sécurité, laquelle détermine une deuxième position absolue, de préférence la totalité de l'unité de sécurité, étant réalisée sous la forme d'une unité de sécurité sécurisée du côté du logiciel et/ou du matériel.
